# FASCICULE DE BREVET EUROPEEN

(11) **EP 4 037 848 B1**
(45) Date de publication et mention de la délivrance du brevet: **01.11.2023**
(21) Numéro de dépôt: 20780243.0
(22) Date de dépôt: 01.10.2020
(51) Int. Cl.: B09C 1/10, A01G 22/00, C02F 3/32, C02F 11/00, C02F 11/02, C02F 101/20

(54) **UTILISATION D'UNE COMPOSITION PHYTOEXTRACTRICE DANS L'EXTRACTION D'AU MOINS UN METAL LOURD PRESENT DANS LE SOL ET PROCÉDÉ DE PHYTOEXTRACTION D'UN SOL CONTAMINÉ PAR AU MOINS UN MÉTAL LOURD EN UTILISANT UNE COMPOSITION PHYTOEXTRACTRICE.**
VERWENDUNG VON EINER PHYTOEXTRAKTIONSZUSAMMENSETZUNG ZUR EXTRAKTION MINDESTENS EINES SCHWERMETALLS IN EINEM BODEN UND VERFAHREN ZUR PHYTOEXTRAKTION VOM BODEN, DER MIT MINDESTENS EINEM SCHWERMETALL KONTAMINIERT IST, UNTER VERWENDUNG EINER PHYTOEXTRAKTIONSZUSAMMENSETZUNG.
USE OF A PHYTOEXTRACTION COMPOSITION IN THE EXTRACTION OF AT LEAST ONE HEAVY METAL PRESENT IN A SOIL AND METHOD FOR PHYTOEXTRACTION OF SOIL CONTAMINATED BY AT LEAST ONE HEAVY METAL USING A PHYTOEXTRACTION COMPOSITION.

(30) Priorité: 04.10.2019 FR 1911013
(43) Date de publication de la demande: 10.08.2022
(73) Titulaire: Biomede, 69100 Villeurbanne (FR)
(72) Inventeur: GIFU, Patricia, 69100 VILLEURBANNE (FR); VINCENT, Ludovic, 69100 VILLEURBANNE (FR)
(74) Mandataire: Fidal Innovation
(86) Numéro de dépôt international: PCT/EP2020/077598
(87) Numéro de publication internationale: WO 2021/064143

(56) Documents cités:
- CN-A- 104 984 990
- CN-A- 105 458 000
- CN-A- 108 787 721

## Description

La présente invention concerne l'utilisation d'une composition phytoextractrice dans l'extraction d'au moins un métal lourd présent dans le sol, et en particulier le cuivre.

Les métaux lourds tels que le plomb, l'arsenic, le cadmium, le cuivre, le zinc, le nickel et le mercure constituent une des principales sources de pollution des sols et sont continuellement introduits dans les sols en raison de diverses activités telles que les activités agricoles, notamment par l'utilisation de produits agrochimiques ou de boues d'épuration dans des sols agricoles, ainsi que les activités industrielles telles que l'incinération de déchets, l'élimination des déchets ou l'extraction minière.

Les techniques de dépollution des sols reposent généralement sur des processus physico-chimiques tels que la stabilisation et le confinement in situ ou l'excavation et le stockage. D'autres approches, dites de biorémédiation, utilisent des microorganismes endogènes (champignons ou levures) en vue d'élimination les contaminants présents dans le sol. Ces approches demandent un investissement relativement important et une technicité particulière qui limite leur utilisation en particulier dans les pays en voie de développement.

Dans les années 1980, une nouvelle conception de la réhabilitation des sols pollués a été proposée en utilisant des plantes présentant la particularité de se développer sur des milieux métallifères. Cette approche appelée « phytorémédiation » est basée sur l'utilisation de plantes supérieures susceptibles d'extraire, stabiliser ou dégrader des substances polluant l'environnement. Toutefois, ces espèces végétales dites « hyperaccumulatrices » sont généralement peu utilisées en phytoextraction en raison de leur croissance lente et leur faible production de biomasse.

Dans la publication de McGrath et al (1993), les auteurs ont testé la capacité de diverses plantes hyperaccumulatrices et en particulier *Thlaspi caerulescens, Cardaminopsos halleri, Alyssum tenium, Alyssum lesbiacum, Alyssum murale* et *Thalspi ochroleucum* à extraire le zinc présent dans un sol limoneux-sabloneux. Néanmoins, les plantes utilisées dans McGrath sont caractérisées par une faible biomasse et une croissance lente, ce qui les rend moins efficaces pour une utilisation à grande échelle.

La demande de brevet CN 106944469 décrit une méthode de phytorémédiation d'un sol contaminé par du cadmium, comprenant l'ensemencement de *Calendula officinalis* dans le sol contaminé et la récolte de *Calendula officinalis* après sa fleuraison.

La demande de brevet CN108787721 décrit une méthode de phytoremédiation pour les zones arides ou semi-arides contaminés par le cuivre, ladite méthode utilisant des graines de *Calendula officinalis* pour extraire le cuivre du sol.

La demande de brevet US2015/101247 décrit une méthode de phytoremédiation pour les sols contaminés par la cadium et/ou le plomb, ladite méthode utilisant des plants *d'Emilia Sonchifolia L.*

La demande de brevet JP2004-243313 décrit une méthode de purification de sol, dans laquelle l'absorption des métaux lourds par la plante est augmentée grâce à l'application sur le sol de chlorure de fer, à raison de 0,05 à 50g/kg de sol, la plante pouvant être un tournesol ou un carthame.

La demande de brevet CN109127693 décrit un procédé d'assainissement de sols pollués par le cuivre, le plomb et l'arsenic par inoculation de plants de tournesols et de ricin avec

### Bacillus subtilis

Le cuivre est un métal très commun qui est naturellement présent dans l'environnement, il est donc nécessaire à la biodiversité. Par ailleurs, depuis plusieurs décennies, les hommes l'utilisent énormément dans leurs activités. Or, l'élimination du cuivre est très difficile et de fortes concentrations en cuivre dans les sols ont des effets néfastes sur les organismes vivants. Plus particulièrement, l'accumulation de cuivre dans les sols perturbe les échanges nutritionnels, effectués entre la terre et les plantes, ce qui a pour conséquence de réduire la fertilité du sol, voire de le rendre incultivable dans les cas les plus extrêmes. Cette conséquence peut notamment s'observer par la pousse difficile des jeunes plants ou même par la sensibilité qu'ils présentent face aux pathogènes. D'autre part, les fortes concentrations en cuivre ont également un effet toxique sur la faune présente dans les sols, et notamment les lombrics. En effet, une concentration importante de cuivre dans le sol a pour conséquence de réduire la population de lombrics, réduisant ainsi leurs capacités à créer des tunnels permettant l'irrigation et l'aération des sols et entrainant l'étouffement des plantes. Par ailleurs, de fortes concentrations en cuivre dans les sols ont également un effet néfaste sur le développement des plantes, impactant directement la qualité de la production et le rendement final.

Ainsi, il existe un besoin de mettre au point un nouveau procédé permettant d'extraire les métaux lourds présents dans le sol, de manière naturelle, fiable, rapide, moins couteuse et sans utiliser des processus physiques et/ou chimiques et/ou bactériens.

Les inventeurs ont montré de manière surprenante que l'utilisation d'une composition phytoextractrice comprenant des graines d'au moins une plante appartenant à la famille des *Asteraceae* permettait d'extraire le cuivre présent dans le sol, à une teneur supérieure ou égale à 200 mg kilogramme de matière sèche, sans dégrader le sol.

Ainsi, la présente invention porte sur une composition phytoextractrice comprenant des graines d'au moins une plante appartenant à la famille des Asteraceae pour son utilisation dans l'extraction d'au moins un métal lourd présent dans un sol.

Par « composition phytoextractrice », on entend une composition comprenant des plantes absorbant et concentrant dans leurs parties aériennes les métaux lourds présents dans le sol. La composition phytoextractrice selon l'invention est une composition solide comprenant des graines de plantes.

En particulier, l'invention concerne une utilisation d'une composition phytoextractrice selon la revendication 1, et un procédé de phytoextraction d'un sol contaminé selon la revendication 5. Les revendications dépendantes se réfèrent à des modes de réalisation préférés de l'invention.

Dans l'invention, les plantes de la composition phytoextractrice sont des plantes appartenant à la famille des Asteraceae. Dans l'invention, l'au moins une plante appartenant à la famille des Asteraceae de la composition phytoextractrice de l'invention est choisie parmi les espèces du genre *Calendula officinalis, Tagetes, Verbascum* et un mélange de celles-ci. Avantageusement, les plantes appartenant à la famille des Asteraceae, et en particulier les espèces du genre *Calendula officinalis, Tagetes* et *Verbascum* présentent l'avantage d'être dotées d'une capacité de résistance aux métaux lourds, d'une croissance rapide, d'un système racinaire développé, d'une aptitude à produire beaucoup de biomasse et à être capable de transloquer les éléments vers les parties récoltables. Avantageusement, les plantes appartenant à la famille des Asteraceae, et en particulier les espèces du genre *Calendula officinalis, Tagetes* et *Verbascum* sont capables d'accumuler dans leurs feuilles à une teneur supérieure ou égale à 500 mg de cuivre par gramme de matière sèche, soit un rendement de 1,5 à 2 tonnes de cuivre par hectare de plantes cultivées.

Dans un mode de réalisation avantageux de l'invention, la composition phytoextractrice comprend au moins 70% en poids de graines de l'espèce du genre *Calendula officinalis.* Avantageusement, la composition phytoextractrice comprend au moins 71% en poids, avantageusement au moins 72% en poids, avantageusement au moins 73% en poids, avantageusement au moins 74% en poids, avantageusement au moins 75% en poids, avantageusement au moins 76% en poids, avantageusement au moins 77% en poids, avantageusement au moins 78% en poids, avantageusement au moins 79% en poids, avantageusement au moins 80% en poids, avantageusement au moins 85% en poids, avantageusement au moins 86% en poids, avantageusement au moins 87% en poids, avantageusement au moins 88% en poids, avantageusement au moins 89% en poids, avantageusement au moins 90% en poids, avantageusement au moins 91% en poids, avantageusement au moins 92% en poids, avantageusement au moins 93% en poids, avantageusement au moins 94% en poids, avantageusement au moins 95% en poids, avantageusement au moins 96% en poids, avantageusement au moins 97% en poids, avantageusement au moins 98% en poids, avantageusement au moins 99% en poids de graines de l'espèce du genre *Calendula officinalis.*

Dans un autre mode de réalisation avantageux de l'invention, la composition phytoextractrice comprend exclusivement des graines de l'espèce du genre *Calendula officinalis.* En d'autres termes, la composition phytoextractrice selon l'invention comprend 100% en poids de graines de l'espèce du genre *Calendula officinalis.*

Dans un autre mode de réalisation avantageux de l'invention, la composition phytoextractrice peut comprendre un mélange des espèces du genre *Calendula officinalis* et *Tagetes.* Avantageusement, la composition phytoextractrice comprend 90% en poids de graines de l'espèce du genre *Calendula officinalis* et 10% en poids de graines de l'espèce du genre Tagetes. Dans un mode de réalisation particulièrement avantageux, la composition phytoextractrice comprend 91% en poids de graines de l'espèce du genre *Calendula officinalis* et 9 % en poids de graines de l'espèce du genre *Tagetes.* Avantageusement, la composition phytoextractrice comprend 92% en poids de graines de l'espèce du genre *Calendula officinalis* et 8 % en poids de graines de l'espèce du genre *Tagetes.* Avantageusement, la composition phytoextractrice comprend 93% en poids de graines de l'espèce du genre *Calendula officinalis* et 7 % en poids de graines de l'espèce du genre *Tagetes.* Avantageusement, la composition phytoextractrice comprend 94% en poids de graines de l'espèce du genre *Calendula officinalis* et 6 % en poids de graines de l'espèce du genre *Tagetes.* Avantageusement, la composition phytoextractrice comprend 95% en poids de graines de l'espèce du genre *Calendula officinalis* et 5 % en poids de graines de l'espèce du genre *Tagetes.* Avantageusement, la composition phytoextractrice comprend 96% en poids de graines de l'espèce du genre *Calendula officinalis* et 4 % en poids de graines de l'espèce du genre *Tagetes.* Avantageusement, la composition phytoextractrice comprend 97% en poids de graines de l'espèce du genre *Calendula officinalis* et 3 % en poids de graines de l'espèce du genre *Tagetes.* Avantageusement, la composition phytoextractrice comprend 98% en poids de graines de l'espèce du genre *Calendula officinalis* et 2 % en poids de graines de l'espèce du genre *Tagetes.* Avantageusement, la composition phytoextractrice comprend 99% en poids de graines de l'espèce du genre *Calendula officinalis* et 1 % en poids de graines de l'espèce du genre *Tagetes.*

Dans un autre mode de réalisation avantageux de l'invention, la composition phytoextractrice peut comprendre un mélange des espèces du genre *Calendula officinalis* et *Verbascum.* Dans un mode de réalisation particulier avantageux, les espèces du genre *Verbascum* sont du genre *Verbascum thapsus,* également appelé molène thapsus.

Avantageusement, la composition phytoextractrice comprend au moins 70% en poids de graines de l'espèce du genre *Calendula officinalis* et 30% en poids de graines de l'espèce du genre *Verbascum.* Dans un mode de réalisation particulièrement avantageux, la composition phytoextractrice comprend 75% en poids de graines de l'espèce du genre *Calendula officinalis* et 25 % en poids de graines de l'espèce du genre *Verbascum.* Avantageusement, la composition phytoextractrice comprend 80% en poids de graines de l'espèce du genre *Calendula officinalis* et 20 % en poids de graines de l'espèce du genre *Verbascum.* Avantageusement, la composition phytoextractrice comprend 81% en poids de graines de l'espèce du genre *Calendula officinalis* et 19% en poids de graines de l'espèce du genre *Verbascum.* Avantageusement, la composition phytoextractrice comprend 82% en poids de graines de l'espèce du genre *Calendula officinalis* et 18% en poids de graines de l'espèce du genre *Verbascum.* Avantageusement, la composition phytoextractrice comprend 83% en poids de graines de l'espèce du genre *Calendula officinalis* et 17% en poids de graines de l'espèce du genre *Verbascum.* vantageusement, la composition phytoextractrice comprend 84% en poids de graines de l'espèce du genre *Calendula officinalis* et 16% en poids de graines de l'espèce du genre *Verbascum.* Avantageusement, la composition phytoextractrice comprend 85% en poids de graines de l'espèce du genre *Calendula officinalis* et 15% en poids de graines de l'espèce du genre *Verbascum.* Avantageusement, la composition phytoextractrice comprend 86% en poids de graines de l'espèce du genre *Calendula officinalis* et 14% en poids de graines de l'espèce du genre *Verbascum.* Avantageusement, la composition phytoextractrice comprend 87% en poids de graines de l'espèce du genre *Calendula officinalis* et 13% en poids de graines de l'espèce du genre *Verbascum.* Avantageusement, la composition phytoextractrice comprend 88% en poids de graines de l'espèce du genre *Calendula officinalis* et 12% en poids de graines de l'espèce du genre *Verbascum.* Avantageusement, la composition phytoextractrice comprend 89% en poids de graines de l'espèce du genre *Calendula officinalis* et 11% en poids de graines de l'espèce du genre *Verbascum.* Avantageusement, la composition phytoextractrice comprend 90% en poids de graines de l'espèce du genre *Calendula officinalis* et 10 % en poids de graines de l'espèce du genre *Verbascum.* Avantageusement, la composition phytoextractrice comprend 95% en poids de graines de l'espèce du genre *Calendula officinalis* et 5 % en poids de graines de l'espèce du genre *Verbascum.* Avantageusement, la composition phytoextractrice comprend 96% en poids de graines de l'espèce du genre *Calendula officinalis* et 4 % en poids de graines de l'espèce du genre *Verbascum.* Avantageusement, la composition phytoextractrice comprend 97% en poids de graines de l'espèce du genre *Calendula officinalis* et 3 % en poids de graines de l'espèce du genre *Verbascum.* Avantageusement, la composition phytoextractrice comprend 98% en poids de graines de l'espèce du genre *Calendula officinalis* et 2 % en poids de graines de l'espèce du genre *Verbascum.* Avantageusement, la composition phytoextractrice comprend 99% en poids de graines de l'espèce du genre *Calendula officinalis* et 1 % en poids de graines de l'espèce du genre *Verbascum.*

Dans un autre mode de réalisation particulièrement avantageux de l'invention, la composition phytoextractrice peut comprendre un mélange des espèces du genre *Calendula officinalis Tagetes et Verbascum.* Avantageusement, la composition phytoextractrice comprend au moins 70% en poids de graines de l'espèce du genre *Calendula officinalis,* 10% en poids de graines de l'espèce du genre *Tagetes* et 20% en poids de graines de l'espèce du genre *Verbascum.*

Dans un mode de réalisation particulier, la composition phytoextractrice peut comprendre en outre un ou plusieurs intrants. L'utilisation d'un ou plusieurs intrants permet notamment d'augmenter la quantité totale en métaux lourds extraits, essentiellement grâce aux rendements plus élevé en biomasse. À titre d'exemples d'intrants, on peut notamment citer les fertilisants azotés, les engrais phosphatés, les acides organiques tels que l'acide citrique, l'acide nitriloacétique et/ou l'acide gallique, les sucres. Dans un mode de réalisation particulièrement avantageux, l'intrant est appliqué à une quantité de 30 kg par hectare. Avantageusement, l'intrant est appliqué à une quantité de 25 kg par hectare, avantageusement à une quantité de 20 kg par hectare.

Dans un mode de réalisation particulièrement avantageux de l'invention, la composition phytoextractrice comprend exclusivement des graines de l'espèce du genre *Calendula officinalis* et un ou plusieurs intrants, choisis parmi les fertilisants azotés. Avantageusement, la composition phytoextractrice comprend 100% en poids de graines de l'espèce du genre *Calendula officinalis* et un ou plusieurs intrants, choisis parmi les fertilisants azotés.

Dans un mode de réalisation particulièrement avantageux de l'invention, la composition phytoextractrice comprend un mélange de graines de l'espèce du genre *Calendula officinalis* et de l'espèce du genre *Tagetes* et un ou plusieurs intrants, choisis parmi les fertilisants azotés.

Avantageusement, la composition phytoextractrice comprend au moins 90% en poids de graines de l'espèce du genre *Calendula officinalis* et 10% en poids de graines de l'espèce du genre *Tagetes* et un ou plusieurs intrants, choisis parmi les fertilisants azotés.

Dans un autre mode de réalisation particulièrement avantageux de l'invention, la composition phytoextractrice comprend un mélange de graines de l'espèce du genre *Calendula officinalis* et de l'espèce du genre *Verbascum* et un ou plusieurs intrants, choisis parmi les fertilisants azotés.

Avantageusement, la composition phytoextractrice comprend au moins 70% en poids de graines de l'espèce du genre *Calendula officinalis* et 30% en poids de graines de l'espèce du genre *Verbascum* et un ou plusieurs intrants, choisis parmi les fertilisants azotés. Dans un autre mode de réalisation particulièrement avantageux de l'invention, la composition phytoextractrice comprend un mélange de graines de l'espèce du genre *Calendula officinalis,* de l'espèce du genre *Tagetes* et de l'espèce du genre *Verbascum* et un ou plusieurs intrants, choisis parmi les fertilisants azotés.

Avantageusement, la composition phytoextractrice comprend au moins 70% en poids de graines de l'espèce du genre *Calendula officinalis,* 10% en poids de graines de l'espèce du genre *Tagetes* et 20% en poids de graines de l'espèce du genre *Verbascum* et un ou plusieurs intrants, choisis parmi les fertilisants azotés.

La composition phytoextractrice selon l'invention permet l'extraction d'au moins un métal lourd présent dans le sol, ledit métal lourd est choisi parmi cuivre, l'arsenic, le sélénium, l'aluminium, le chrome, le nickel, le zinc, le thorium et le gallium. Dans un mode de réalisation particulièrement avantageux, l'au moins un métal lourd présent dans le sol n'est pas du cadmium.

La composition phytoextractrice selon l'invention permet l'extraction du cuivre présent dans le sol. Avantageusement, la composition phytoextractrice selon l'invention permet l'extraction du cuivre à une teneur supérieure ou égale à 500 mg de cuivre par gramme de matière sèche, soit un rendement de 1 à 10 kilos de cuivre par hectare de plantes cultivées.

Avantageusement, la composition phytoextractrice selon l'invention permet l'extraction du sélénium à une teneur supérieure ou égale à 50 mg de sélénium par gramme de matière sèche, soit un rendement de 0,1 kilos de sélénium par hectare de plantes cultivées. Avantageusement, la composition phytoextractrice selon l'invention permet l'extraction d'aluminium à une teneur supérieure ou égale à 200 mg d'aluminium par gramme de matière sèche, soit un rendement de 0,2 kilos d'aluminium par hectare de plantes cultivées.

Avantageusement, la composition phytoextractrice selon l'invention permet l'extraction de chrome à une teneur supérieure ou égale à 200 mg de chrome par gramme de matière sèche, soit un rendement supérieur ou égal à 0,2 kilos de chrome par hectare de plantes cultivées.

Avantageusement, la composition phytoextractrice selon l'invention permet l'extraction de nickel à une teneur supérieure ou égale à 100 mg de nickel par gramme de matière sèche, soit un rendement supérieur ou égal à 0,1 kilos de nickel par hectare de plantes cultivées.

Avantageusement, la composition phytoextractrice selon l'invention permet l'extraction de zinc à une teneur supérieure ou égale à 100 mg de zinc par gramme de matière sèche, soit un rendement supérieur ou égal à 0,1 kilos de zinc par hectare de plantes cultivées. Avantageusement, la composition phytoextractrice selon l'invention permet l'extraction de l'arsenic à une teneur supérieure ou égale à 100 mg d'arsenic par gramme de matière sèche, soit un rendement supérieur ou égal à 0,2 kilos d'arsenic par hectare de plantes cultivées.

Avantageusement, la composition phytoextractrice selon l'invention permet l'extraction du plomb à une teneur supérieure ou égale à 100 mg de thorium par gramme de matière sèche, soit un rendement supérieur ou égal à 0,2 kilos de thorium par hectare de plantes cultivées.

La composition phytoextractrice selon l'invention est utilisée pour extraire au moins un métal lourd présent dans un sol, le sol étant un sol agricole.

En particulier, le sol agricole est choisi parmi un sol viticole, un sol destiné à l'arboriculture, en particulier l'arboriculture fruitière ou l'arboriculture des arbres d'ornement, un sol destiné à la culture de légumineuses, un sol destiné à la culture des céréales, un sol destiné à l'horticulture, un sol destiné aux cultures des arbres fruitiers, un sol destiné à la théiculture. Avantageusement, le sol est un sol agricole choisi parmi un sol viticole, un sol destiné à l'arboriculture, en particulier l'arboriculture fruitière ou l'arboriculture des arbres d'ornement, un sol en maraichage, un sol destiné à la culture de légumineuses, un sol destiné à la culture des céréales, un sol destiné à l'horticulture, un sol destiné aux cultures des arbres fruitiers, un sol destiné à la théiculture. Selon un mode de réalisation particulier, le sol agricole est un sol viticole. Selon un autre mode de réalisation particulier, le sol agricole est un sol destiné à l'arboriculture, en particulier l'arboriculture fruitière ou l'arboriculture des arbres d'ornement. Avantageusement, le sol destiné à l'arboriculture est choisi parmi un sol destiné à la culture des oliviers, des abricotiers, des amandiers, es amélanchiers, des cerisiers, des châtaigniers, des cognassiers, des cormiers, des merisiers, des mirabelliers, des mûriers blanc, des mûriers noir, des néfliers, des noisetiers, des noyers commun, des pêchers, des pins pignon, des poiriers, des pommiers, des pruniers, des arbousiers, des argousiers, des arganiers, des avocatiers, des bergamotiers, des bibaciers, des bigaradiers, des caroubiers, des cédratiers, des clémentiniers, des citronniers, des dattiers, des palmiers dattier, des Feijoa (Goyavier du Brésil), des figuiers, des figuiers de Barbarie, des grenadiers, des jujubiers, des mandariniers, des néfliers du Japon, des noyers du Queensland, des orangers, des pamplemoussiers, des pacaniers, des plaqueminiers, des acérolas, des anacardiers, des arbre-à-pain, des avocatiers, des badamiers, des bananiers, des caramboliers, des cocotiers, des chérimoliers, des goyaviers, des jacquiers, des litchis, des mangoustaniers, des manguiers, des noyers du Brésil, des pistachiers, des papayers, des safoutiers, des sapotilliers, des tamariniers, la liste 'étant pas limitative.

Selon un autre mode de réalisation particulier, le sol agricole est un sol destiné à la culture de légumineuses. Selon un autre mode de réalisation particulier, le sol agricole est un sol destiné à la culture des céréales. Selon un autre mode de réalisation particulier, le sol agricole est un sol destiné à l'horticulture. Selon un autre mode de réalisation particulier, le sol agricole est un sol destiné aux cultures des arbres fruitiers. Selon un autre mode de réalisation particulier, le sol agricole est un sol destiné à la théiculture.

Au sens de la présente invention, on entend par « sol agricole », un sol se trouvant dans une région où l'indice d'aridité climatique est supérieur à 0,50. L'indice d'aridité climatique (Al_{U}) est défini comme étant le rapport entre la moyenne annuelle des précipitations (P) et l'évapotranspiration potentielle (PET) (Al_{U} = P/PET).

Au contraire, des sols situés dans des régions dont l'indice d'aridité climatique est inférieur ou égal à 0,50 ne seront pas considérés comme des sols agricoles. En particulier, les sols présents dans les régions hyper-arides (indice d'aridité climatique de 0,03), dans les régions arides (indice d'aridité climatique compris entre 0,03 et 0,20) et dans les régions semi-arides (indice d'aridité climatique compris entre 0,20 et 0,50) ne peuvent être considérés comme des sols agricoles au sens de la présente invention. Plus particulièrement, les sols présents dans les régions hyper-arides sont totalement dépourvus de végétation et par conséquence d'agriculture. En ce qui concerne les sols des régions arides ou semi-arides, soit ces sols sont dépourvus d'agriculture, soit leur niveau de production n'est pas régulier, ce qui n'en fait pas des sols agricoles au sens de la présente invention.

La composition phytoextractrice selon l'invention est utilisée pour extraire au moins un métal lourd présent dans un sol, le sol étant des boues de station d'épuration.

Au sens de la présente invention, on entend par «boue de station d'épuration», les boues résiduaires primaires ou secondaires issues de stations d'épuration traitant des eaux usées domestiques ou urbaines (STEP) ou industrielles et d'autres stations d'épuration traitant des eaux usées de composition similaire aux eaux usées domestiques et urbaines et industrielles. Par boue résiduaires primaires, on entend les boues provenant, par exemple, des décanteurs digesteurs des stations d'épuration des eaux usées. Elles sont à la fois riches en matières minérales (microsables, terre, etc.) et contiennent des matières organiques. Par boue résiduaires secondaires, on entend les boues issues de traitements biologiques.

Les boues de stations d'épuration peuvent se présenter sous différente formes et il peut notamment s'agir :
- de boues liquides, ayant subi un épaississement ou un stockage en silo,
- de boues pâteuses, issues de la digestion biologique, et ayant subi une déshydratation sur filtre à bande ou une centrifugation,
- de boues déshydratées,
- de boues séchées,
- de boues chaulées, pâteuses ou solides, ayant subi un chaulage après une déshydratation,
- de boues compostées, issues d'un compostage des boues déshydratées,
- de boues de lagunage, c'est-à-dire des boues liquides ayant été traitées de façon extensive par des macrophytes, et
- de boues solides, résultant d'un traitement par filtre presse ou d'un séchage thermique.

L'utilisation d'une composition phytoextractrice comprenant des graines d'au moins une plante appartenant à la famille des Asteraceae telle que décrite précédemment pour l'extraction d'au moins un métal lourd présent dans un sol, dans laquelle l'au moins un métal lourd présent dans le sol n'étant pas du cadmium est aussi divulguée.

Avantageusement, la présente invention concerne l'utilisation d'une composition phytoextractrice comprenant des graines d'au moins une plante appartenant à la famille des Asteraceae pour l'extraction d'au moins un métal lourd présent dans un sol, caractérisée en ce que l'au moins une plante appartenant à la famille des Asteraceae est choisie parmi les espèces du genre Calendula officinalis,Tagetes, Verbascum et un mélange de celles-ci et en ce que le sol est un sol agricole ou des boues de station d'épuration et en ce que l'au moins un métal lourd présent dans le sol n'étant pas du cadmium,.

Avantageusement, la composition phytoextractrice utilisée peut comprendre au moins 70% en poids de graines de l'espèce du genre Calendula officinalis.

Avantageusement, la composition phytoextractrice utilisée peut comprendre un ou plusieurs intrants.

Avantageusement, la composition phytoextractrice peut être utilisée l'extraction d'au moins un métal lourd présent dans un sol, caractérisée en ce que l'au moins un métal lourd présent dans le sol est choisi parmi le cuivre, l'arsenic, le sélénium, l'aluminium, le chrome, le nickel, le thorium, le zinc et le gallium.

Avantageusement, la composition phytoextractrice peut être utilisée l'extraction d'au moins un métal lourd présent dans un sol, caractérisée en ce que le sol agricole est choisi parmi un sol viticole, un sol destiné à l'arboriculture, un sol destiné à la culture de légumineuses, un sol destiné à la culture des céréales, un sol destiné à l'horticulture, un sol destiné aux cultures des arbres fruitiers et un sol destiné à la théiculture.

L'invention aussi un procédé de phytoextraction d'un sol contaminé par au moins un métal lourd selon la revendication 5, ledit procédé comprenant les étapes :
- d'ensemencement du sol avec une composition phytoextractrice comprenant des graines d'au moins une plante appartenant à la famille des Asteraceae, et
- la récolte de l'au moins une plante appartenant à la famille des Asteraceae.

Selon l'invention, l'étape d'ensemencement du sol est réalisée avec une composition phytoextractrice comprenant des graines d'au moins une plante appartenant à la famille des Asteraceae, choisie parmi les espèces du genre *Calendula officinalis, Tagetes, Verbascum,* et un mélange de celles-ci. Avantageusement, lors de l'étape d'ensemencement, la composition phytoextractrice est appliquée à raison de 20 à 30 kg par hectare de sol contaminé.

L'invention se réfère aussi à un procédé de phytoextraction d'un sol contaminé selon la revendication 5.

Dans un mode de réalisation particulièrement avantageux, la durée de la phytoextraction est inférieure à 5 ans, avantageusement inférieure à 3 ans.

Dans un mode de réalisation particulièrement avantageux, les graines de plante appartenant à la famille des Asteraceae sont ensemencées à raison d'une graine tous les 10 centimètres. Avantageusement, l'espace entre deux graines de plante appartenant à la famille des Asteraceae est compris entre 2 et 10 centimètres, avantageusement entre 3 et 6 centimètres.

Avantageusement, aucune étape d'inoculation des graines d'au moins une plante appartenant à la famille des Asteraceae avec une bactérie et/ou une levure n'est mise en oeuvre dans le procédé selon l'invention. Avantageusement, le procédé selon l'invention ne comprend aucune étape d'inoculation des graines d'au moins une plante appartenant à la famille des Asteraceae avec *Bacillus subtilis.* Avantageusement, aucun apport de fer, ni de chlorure de fer n'est réalisé avant l'étape d'ensemencement du sol avec une composition phytoextractrice comprenant des graines d'au moins une plante appartenant à la famille des Asteraceae. Selon un mode de réalisation particulier de l'invention, le procédé selon l'invention peut en outre comprendre une étape d'apport de cuivre sur le sol avant l'étape d'ensemencement du sol avec une composition phytoextractrice comprenant des graines d'au moins une plante appartenant à la famille des Asteraceae. Avantageusement, la teneur en cuivre apportée est comprise entre 200 et 1500 ppm, avantageusement entre 300 et 1400 ppm, avantageusement entre 350 et 1300 ppm, avantageusement entre 400 et 1200 ppm, avantageusement entre 450 et 1100 ppm, avantageusement entre 500 et 1000 ppm. Avantageusement, la teneur en cuivre apportée est de 500 ppm. Avantageusement, la teneur en cuivre apportée est de 1000 ppm.

### FIGURES

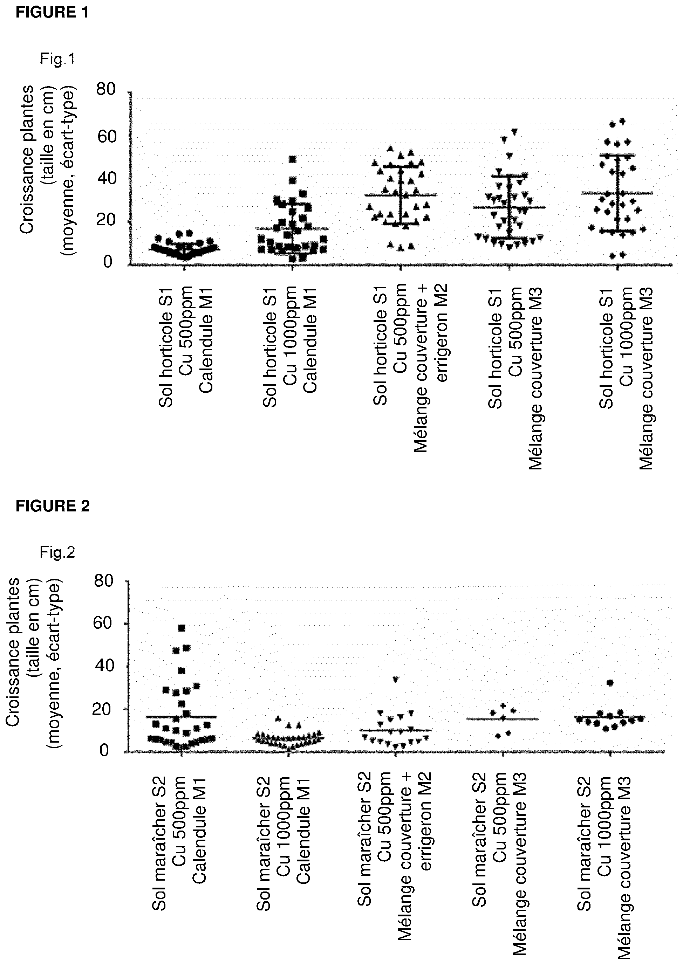

La figure 1 représente la croissance des plantes de *Calendula officinalis* en monoculture (M1), d'un mélange contenant *Calendula officinalis,* de plantes de couvertures (lupin et orge) et des plantes adventices *Erigeron* (M2) ou d'un mélange contenant *Calendula officinalis* et des plantes adventices *Erigeron* (M3) dans un sol horticole avec drainage et sans ou avec un apport en cuivre à des teneurs de 500 et 1000 ppm.
La figure 2 représente la croissance des plantes de *Calendula officinalis* en monoculture (M1), d'un mélange contenant *Calendula officinalis* et des plantes de couvertures (lupin et orge) et des plantes adventices *Erigeron* (M2) ou d'un mélange contenant *Calendula officinalis* et des plantes adventices *Erigeron* (M3) dans un sol maraîcher et sans ou avec un apport en cuivre à des teneurs de 500 et 1000 ppm.

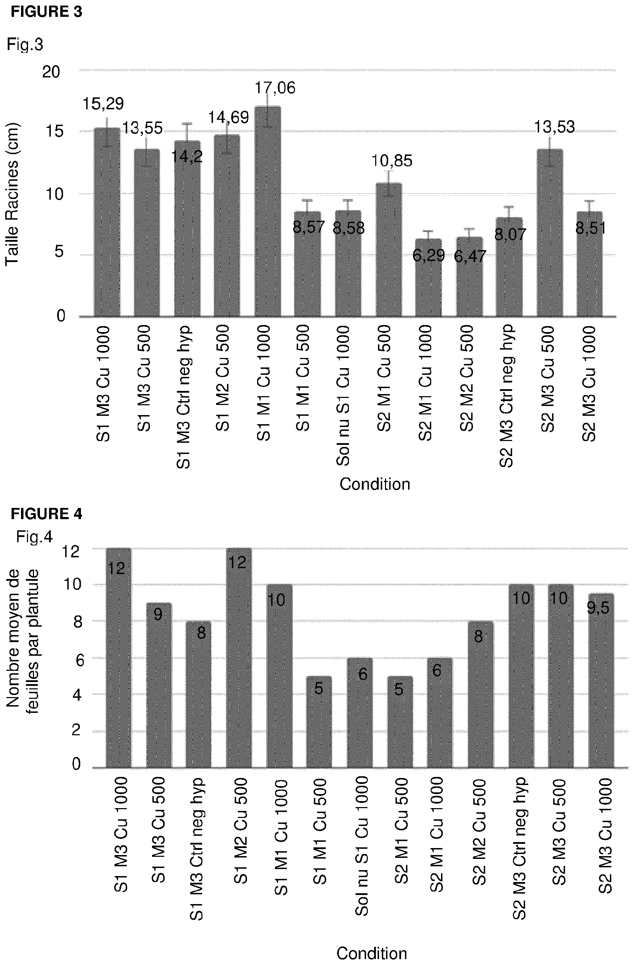

La figure 3 représente la taille des racines des plantules de *Calendula officinalis* en fonction du type de sol, de la teneur en cuivre et de la présence ou non d'un mélange de plantes. S1 représente un type de sol horticole avec drainage et S2 un type de sol maraîcher sans drainage. *Calendula officinalis* est cultivé soit en monoculture M1, soit sous la forme d'un mélange contenant *Calendula officinalis* et des plantes de couvertures (lupin et orge) et des plantes adventices *Erigeron* (M2) ou soit sous la forme d'un mélange contenant *Calendula officinalis* et des plantes adventices *Erigeron* (M3).
La figure 4 représente le nombre de feuilles des plantules de *Calendula officinalis* en fonction du type de sol, de la teneur en cuivre et de la présence ou non d'un mélange de plantes. S1 représente un type de sol horticole avec drainage et S2 un type de sol maraîcher sans drainage. *Calendula officinalis* est cultivé soit en monoculture M1, soit sous la forme d'un mélange contenant *Calendula officinalis* et des plantes de couvertures (lupin et orge) et des plantes adventices *Erigeron* (M2) ou soit sous la forme d'un mélange contenant *Calendula officinalis* et des plantes adventices *Erigeron* (M3).

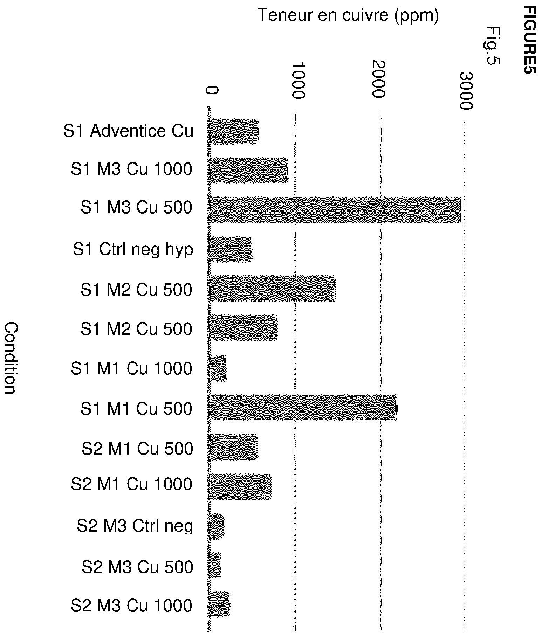

La figure 5 représente la teneur en cuivre dans les feuilles de *Calendula officinalis* après 8 semaines de culture en fonction du type de sol, de la teneur en cuivre et de la présence ou non d'un mélange de plantes. S1 représente un type de sol horticole avec drainage et S2 un type de sol maraîcher sans drainage. Calendula officinalis est cultivé soit en monoculture M1, soit sous la forme d'un mélange contenant *Calendula officinalis* et des plantes de couvertures (lupin et orge) et des plantes adventices *Erigeron* (M2) ou soit sous la forme d'un mélange contenant *Calendula officinalis* et des plantes adventices *Erigeron* (M3).

### EXEMPLES

### Exemple 1 : Extraction du cuivre présent dans un sol horticole et dans un sol maraîcher

### 1/ Matériels et Méthodes

### A/ Préparation du milieu de culture

Deux types de sols ont été choisis, un sol horticole avec drainage et un sol maraîcher.

Pour chacun de ces deux sols, trois types de cultures ont été testées :
- M1 : Culture de *Calendula officinalis* en monoculture,
- M2 : Culture de *Calendula officinalis* en mélange avec des plantes de couvertures (lupin et orge) et des plantes adventices *Erigeron,*
- M3 : Culture d'un mélange contenant *Calendula officinalis* en mélange avec des plantes adventices *Erigeron.*

Pour chacune de ces conditions, l'impact du cuivre a été étudié :
- Culture sans apport de cuivre
- Culture avec un apport en cuivre de 500ppm,
- Culture avec un apport en cuivre de 1000ppm.

Afin de tester cet apport en cuivre, les sols ont étés saturés avec différentes concentrations en cuivre. Mais pour des raisons d'homogénéités tous les sols ont été saturés en eau avec ou sans teneur en cuivre, puis le lit de semence a été réalisé. Au cours de la culture, les sols ont été traités avec de la bouillie bordelaise, afin de garder une concentration en cuivre de 500 et 1000ppm dans les sols.

Le sol est régulièrement analysé à l'aide de l'appareil à rayons X, afin de connaître la teneur en cuivre dans les sols.

### B/ Mesure de la croissance des plantes

La taille des tiges a été mesurée chaque semaine, afin de connaître l'évolution de la croissance des plantules. Des photos ont été également prises, afin de pouvoir traiter ces images sur image j par la suite.

Au bout de 8 semaines, les mesures prises sont analysées et la différence de croissance entre les différentes conditions est étudiée statistiquement.

### C / Étude de l'impact des différents types de milieux sur l'aspect phénotypique de Calendula officinalis

Afin d'étudier les différences phénotypiques présentes entre chacune de ces conditions, des photos ont été prises de chaque plantes de chaque caisse et ces images ont été traité sur image j. Les paramètres étudiés sont la taille finale des racines et des tiges, le nombre de feuilles, la présence ou non de chlorose et l'état de développement des plantes (bourgeons, fleurs).

### 2/ Résultats

### 2.1./ Croissance des plantules dans différents types de sol

### 2.1.1/ Croissance dans un sol horticole

Les résultats obtenus sont présentés en Figure 1.

D'après la figure 1, la croissance des plantules entre la première semaine et la 3ème semaine est identique entre les différentes conditions.

À partir de la 3ème semaine, on observe que :
- la croissance des plantules de *Calendula Officinalis* en mélange avec les plantes adventices Erigeron (M3) est plus importante, lorsque l'apport de cuivre est de 1000 ppm de cuivre (M3 + Cu 1000ppm : 27,5 cm) par rapport à la même culture avec un apport de 500 ppm de cuivre (M3 + Cu 500ppm : 25 cm).
- l'apport de cuivre a un effet sur la croissance des plantules de Calendula Officinalis en mélange avec les plantes adventices Erigeron (M3) (M3 + Cu 1000ppm : 27,5 cm versus M3 : 16 cm sans cuivre), ainsi que sur la croissance des plantules de *Calendula Officinalis* en monocultures (M1 + Cu 500ppm : 15 cm et M1 + Cu 1000ppm : 21,3 cm).
- la croissance des plantules de *Calendula Officinalis* en monocultures (M1) en présence d'un apport de cuivre de 500 ppm semble similaire à celle observée pour les *Calendula Officinalis* en mélange avec les plantes adventices Erigeron (M3) sans apport de cuivre.
- la croissance des plantules de *Calendula Officinalis* en mélange avec des plantes de couverture (lupin et orge) avec un apport en cuivre de 500 ppm (M2 + Cu 500 ppm) semble similaire à celle observée pour les plantules de *Calendula Officinalis* en mélange avec les plantes adventices *Erigeron* avec un apport de 500 ppm de cuivre (M3 + Cu 500 ppm) ainsi qu'à celle observée pour plantules de *Calendula Officinalis* en monocultures (M1 + Cu 1000ppm).

### 2.1.21 Croissance dans un sol maraîcher

Les résultats obtenus sont présentés en Figure 2.

D'après la figure 2, dès la 2ème semaine une différence est observable.

En effet, l'apport de cuivre (500ppm ou 1000ppm) a un effet négatif sur la croissance des plantules de *Calendula Officinalis* en mélange avec les plantes adventices *Erigeron* (M3 + Cu 500ppm : 14 cm ou M3 + Cu 1000 ppm : 12,5 cm) par rapport aux plantules de *Calendula Officinalis* en mélange avec les plantes adventices *Erigeron* sans apport de cuivre (M3 : 27 cm),

### 2.21 Impact du type de sol et de l'apport en cuivre sur la taille des racines

Les résultats obtenus sont présentés en Figure 3.

D'après la figure 3, la taille des racines dans le milieu S1 (sol horticole avec drainage) est plus homogène et plus importante que dans le sol S2 (sol maraîcher sans drainage). Seules les plantes de *Calendula Officinalis* cultivées en monoculture avec un apport en cuivre de 500ppm (M1 + Cu 500ppm) ont des racines plus courtes que les autres plantes de *Calendula Officinalis* (8,57cm).

Dans le milieu S2, les plantules de *Calendula Officinalis* cultivées en monoculture avec un apport de 500ppm de cuivre (M1 + Cu 500ppm : 10,85 cm) et celles cultivées avec des plantes adventices *Erigeron* avec un apport en cuivre de 500ppm (M3 + Cu 500 ppm : 13,53 cm) possèdent des racines plus longues que les autres conditions qui sont aux alentours de 8cm.

Aucune différence significative au niveau de la taille des racines n'a été montré par le test statistique de Wilcoxon - Mann Whitney entre les plantes qui ont poussé sur un milieu sans un cuivre et celles qui ont poussé sur un milieu avec du cuivre.

### 2.31 Impact du type de sol et de l'apport en cuivre sur le nombre de feuilles

Les résultats obtenus sont présentés en Figure 4.

D'après la figure 4, les plantules qui possèdent le plus de feuilles correspondent à celles qui ont poussées dans le sol horticole avec drainage (S1). Dans le milieu S1, plus la teneur en cuivre est élevé, plus le nombre de feuilles est important. De plus l'ajout le nombre de feuilles est plus important dans les milieux de cultures M2 ou M3 que dans le milieu M1.

Pour les plantes qui ont poussées dans le sol maraicher et en monoculture, il existe une tendance similaire à celles qui ont poussées dans le sol horticole. En revanche, celles qui ont poussés en mélange avec des plantes adventices *Erigeron,* le nombre de feuille est le même avec ou sans ajout de cuivre.

### 2.4/Quantité de cuivre adsorbée dans les feuilles de Calendula officinalis

Les résultats obtenus sont présentés en Figure 5.

D'après la figure 5, la teneur en cuivre adsorbée dans les feuilles de *Calendula officinalis* est supérieure à 2000ppm, lorsque Calendula officinalis est cultivée seule sur un sol de type sol horticole avec drainage et avec un apport de cuivre de 500ppm (S1 M1 Cu 500ppm : teneur en cuivre dans les feuilles : 2300ppm).

La teneur en cuivre adsorbée dans les feuilles de *Calendula officinalis* est supérieure à 2500ppm, lorsque *Calendula officinalis* est cultivée en mélange avec des plantes adventices *Erigeron* (M3) sur un sol de type sol horticole avec drainage et avec un apport de cuivre de 500ppm (S1 M3Cu 500ppm : teneur en cuivre dans les feuilles : 3000ppm).

Ces résultats montrent que *Calendula officinalis* seule (M1) ou en combinaison avec des plantes adventices *Erigeron* (M3) est capable d'extraire le cuivre présent dans le sol et de les stocker au niveau de ses feuilles.

### Conclusions

*Calendula officinalis* absorbe du cuivre lorsqu'il y en a dans le milieu (jusqu'à 4600ppm) même dans le milieu témoin les feuilles analysées présentaient du cuivre ce qui montre que le milieu contrôle a été contaminé au cuivre et que même dans un milieu avec une faible présence en cuivre, ces plantes l'absorbent.

L'ajout de cuivre induit une croissance plus rapide de *Calendula officinalis* et la présence d'autres plantes en culture entraîne un effet supplémentaire dans la rapidité de croissance *Calendula officinali.*

De plus, ces plantes de *Calendula officinalis* ont un meilleur développement racinaire dans un milieu drainant que dans un sol non drainant. Mais la présence de cuivre n'impact pas la croissance racinaire ni le développement de la tige.

La présence de cuivre et d'un mélange de plantes permet également un meilleur développement foliaire de *Calendula officinalis,* et une biomasse est plus importante.

## Revendications

1. Utilisation d'une composition phytoextractrice comprenant des graines d'au moins une plante appartenant à la famille des Asteraceae pour l'extraction d'au moins un métal lourd présent dans un sol, dans laquelle l'au moins une plante appartenant à la famille des *Asteraceae* est choisie parmi les espèces du genre *Calendula officinalis, Tagetes, Verbascum* et un mélange de celles-ci, et dans laquelle l'au moins un métal lourd présent dans le sol est choisi parmi le cuivre, l'arsenic, le sélénium, l'aluminium, le chrome, le nickel, le thorium, le zinc et le gallium, ladite utilisation étant **caractérisée en ce que** le sol est un sol agricole ou des boues de station d'épuration.

2. Utilisation de la composition phytoextractrice selon la revendication 1, **caractérisée en ce qu'**elle comprend au moins 70% en poids de graines de l'espèce du genre *Calendula officinalis.*

3. Utilisation de la composition phytoextractrice selon l'une des revendications 1 à 2, **caractérisée en ce qu'**elle peut comprendre en outre un ou plusieurs intrants.

4. Utilisation de la composition phytoextractrice selon l'une des revendications 1 à 3, **caractérisée en ce que** le sol agricole est choisi parmi un sol viticole, un sol destiné à l'arboriculture, un sol destiné à la culture de légumineuses, un sol destiné à la culture des céréales, un sol destiné à l'horticulture, un sol destiné aux cultures des arbres fruitiers et un sol destiné à la théiculture.

5. Procédé de phytoextraction d'un sol contaminé par au moins un métal lourd, à l'exception du cadmium, comprenant les étapes :
- d'ensemencement du sol avec une composition phytoextractrice comprenant des graines d'au moins une plante appartenant à la famille des Asteraceae, et
- la récolte de l'au moins une plante appartenant à la famille des Asteraceae, dans lequel l'au moins une plante appartenant à la famille des Asteraceae est choisie parmi les espèces du genre Calendula officinalis, Tagetes, Verbascum et un mélange de celles-ci et dans lequel l'au moins un métal lourd présent dans le sol est choisi parmi le cuivre, l'arsenic, le sélénium, l'aluminium, le chrome, le nickel, le thorium, le zinc et le gallium, ledit procédé étant **caractérisé en ce que** le sol est un sol agricole ou des boues de station d'épuration.

6. Procédé de phytoextraction selon la revendication 5, **caractérisé en ce que** la composition phytoextractrice est appliquée à raison de 20 à 30 kg par hectare de sol contaminé.

## Patentansprüche

1. Verwendung einer Phytoextraktionszusammensetzung, die Samen von mindestens einer zur Familie der Asteraceae gehörenden Pflanze umfasst, zur Extraktion von mindestens einem in einem Boden vorhandenen Schwermetall, wobei die mindestens eine zur Familie der Asteraceae gehörende Pflanze aus den Arten der Gattungen *Calendula officinalis, Tagetes, Verbascum* und einer Mischung davon ausgewählt ist, und wobei das mindestens eine im Boden vorhandene Schwermetall aus Kupfer, Arsen, Selen, Aluminium, Chrom, Nickel, Thorium, Zink und Gallium ausgewählt ist, wobei die Verwendung **dadurch gekennzeichnet ist, dass** der Boden ein landwirtschaftlicher Boden oder Klärschlamm ist.

2. Verwendung der Phytoextraktionszusammensetzung nach Anspruch 1, **dadurch gekennzeichnet, dass** sie mindestens 70 Gew. -% an Samen von Arten der Gattung *Calendula officinalis* enthält.

3. Verwendung der Phytoextraktionszusammensetzung nach einem der Ansprüche 1 bis 2, **dadurch gekennzeichnet, dass** sie auch einen oder mehrere Produktionsinput(s) enthalten kann.

4. Verwendung der Phytoextraktionszusammensetzung nach einem der Ansprüche 1 bis 3, **dadurch gekennzeichnet, dass** der landwirtschaftliche Boden ausgewählt ist aus einem Boden für den Weinbau, einem Boden für die Baumzucht, einem Boden für den Anbau von Hülsenfrüchten, einem Boden für den Anbau von Getreide, einem Boden für den Gartenbau, einem Boden für den Anbau von Obstbäumen und einem Boden für den Teeanbau.

5. Verfahren zur Phytoextraktion eines durch mindestens ein Schwermetall, mit Ausnahme von Cadmium, kontaminierten Bodens, umfassend die Schritte::
- Aussäen des Bodens mit einer Phytoextraktionszusammensetzung, die Samen von mindestens einer Pflanze aus der Familie der Asteraceae enthält, und
- Ernten der mindestens einen Pflanze, die zur Familie der Asteraceae gehört,
wobei die mindestens eine Pflanze, die zur Familie der Asteraceae gehört, aus den Arten der Gattungen *Calendula officinalis, Tagetes, Verbascum* und einer Mischung davon ausgewählt ist, und wobei das mindestens eine im Boden vorhandene Schwermetall aus Kupfer, Arsen, Selen, Aluminium, Chrom, Nickel, Thorium, Zink und Gallium ausgewählt ist, wobei das Verfahren **dadurch gekennzeichnet ist, dass** der Boden ein landwirtschaftlicher Boden oder Klärschlamm ist.

6. Phytoextraktionsverfahren nach Anspruch 5, **dadurch gekennzeichnet, dass** die Phytoextraktionszusammensetzung in einer Menge von 20 bis 30 kg pro Hektar kontaminierten Bodens aufgebracht wird.

## Claims

1. Use of a phytoextraction composition comprising seeds from at least one plant belonging to the *Asteraceae* family for the extraction of at least one heavy metal present in a soil, wherein the at least one plant belonging to the *Asteraceae* family is chosen from the species of the genera *Calendula officinalis, Tagetes, Verbascum* and a mixture thereof, and wherein the at least one heavy metal present in the soil is chosen from copper, arsenic, selenium, aluminium, chromium, nickel, thorium, zinc, and gallium, said use being **characterized in that** the soil is an agricultural soil or sewage sludge.

2. Use of the phytoextraction composition according to claim 1, **characterized in that** it comprises at least 70% by weight of seeds of the species from the genus *Calendula officinalis.*

3. Use of the phytoextraction composition according to one of claims 1 to 2, **characterized in that** it can also comprise one or more production input(s).

4. Use of the phytoextraction composition according to one of claims 1 to 3, **characterized in that** the agricultural soil is chosen from a viticulture soil, a soil intended for arboriculture, a soil intended for growing legumes, a soil intended for growing cereals, a soil intended for horticulture, a soil intended for growing fruit trees and a soil intended for tea growing.

5. Method for the phytoextraction of a soil contaminated by at least one heavy metal, with the exception of cadmium, comprising the steps of:
- sowing the soil with a phytoextraction composition comprising seeds from at least one plant belonging to the *Asteraceae* family, and
- harvesting the at least one plant belonging to the *Asteraceae* family,
wherein the at least one plant belonging to the *Asteraceae* family is chosen from the species of the genera *Calendula officinalis, Tagetes, Verbascum* and a mixture thereof, and wherein the at least one heavy metal present in the soil is chosen from copper, arsenic, selenium, aluminium, chromium, nickel, thorium, zinc, and gallium, said method being **characterized in that** the soil is an agricultural soil or sewage sludge.

6. Phytoextraction method according to claim 5, **characterized in that** the phytoextraction composition is applied at a rate of 20 to 30 kg per hectare of contaminated soil.
